# EUROPÄISCHE PATENTSCHRIFT

(11) **EP 2 002 340 B1**
(45) Veröffentlichungstag und Bekanntmachung des Hinweises auf die Patenterteilung: **25.12.2013**
(21) Anmeldenummer: 07726502.3
(22) Anmeldetag: 26.02.2007
(51) Int. Cl.: G06F 11/267

(54) **VERFAHREN ZUM TESTEN ZUMINDEST EINER IN EINEM STEUERGERÄT EINGEBAUTEN RECHENEINHEIT**
METHOD FOR TESTING AT LEAST ONE COMPUTATION UNIT WHICH IS INSTALLED IN A CONTROL DEVICE
PROCÉDÉ DE TEST D'AU MOINS UNE UNITÉ DE CALCUL INTÉGRÉE DANS UN APPAREIL DE COMMANDE

(30) Priorität: 28.03.2006 DE 102006014267
(43) Veröffentlichungstag der Anmeldung: 17.12.2008
(73) Patentinhaber: Robert Bosch GmbH, 70442 Stuttgart (DE)
(72) Erfinder: AUE, Axel, 70825 Muenchingen (DE)
(86) Internationale Anmeldenummer: PCT/EP2007/051802
(87) Internationale Veröffentlichungsnummer: WO 2007/110290

(56) Entgegenhaltungen:
- EP-A- 0 548 585
- US-A1- 2004 064 757
- US-B1- 6 243 665
- MESSMER, H.P.: "The Indispensable PC Hardware Book, Second Edition" 1995, ADDISON-WESLEY PUBLISHING COMP. , WOKINGHAM, UK , XP002445603 Seite 211 Seite 220 Seite 259 - Seite 266 Seite 347 Seite 534 - Seite 535

## Beschreibung

### STAND DER TECHNIK

Die vorliegende Erfindung betrifft ein Verfahren zum Testen zumindest einer in einem Steuergerät eingebauten Recheneinheit, wobei das Steuergerät insbesondere in einem Kraftfahrzeug eingebaut ist.

Das technische Gebiet der Erfindung betrifft das Testen integrierter Schaltungen, insbesondere deren Recheneinheit oder Recheneinheiten. Im Folgenden werden Recheneinheit, Rechenwerk, Rechenvorrichtung und Digitalkern analog verwendet und bezeichnen Gleiches.

Es ist bekannt, integrierte Schaltungen bzw. deren Rechenwerk oder Rechenwerke in einem nicht-verbauten Zustand zu testen. Dabei bedeutet nicht-verbauter Zustand, dass die integrierte Schaltung bzw. das Rechenwerk oder die Rechenwerke nicht, insbesondere noch nicht in einem Steuergerät, in einer Steuervorrichtung oder dergleichen verbaut oder eingebaut sind. Dieses Testen führt insbesondere der Halbleiterhersteller der integrierten Schaltung durch. Beispiele für solche Tests sind der sogenannte Stuck-At-Test und der Path-Delay-Test. Mittels des Stuck-At-Tests wird ein potenzieller Kurzschluss eines Signals nach Versorgungsspannung oder Masse beispielsweise in einer Scan-Kette oder einem Scan-Pfad der entsprechenden Recheneinheit getestet. Mittels des Path-Delay-Tests werden die Laufzeiten der Signale beispielsweise durch die Scan-Ketten oder Scan-Pfade getestet. Detaillierte Beschreibungen des Stuck-At-Tests und des Path-Delay-Tests sind aus der EP 0548585 A2 bekannt.

Aus der US 2004/064 757 A1 ist ein weiteres Verfahren zum Testen eines Steuergeräts bekannt.

Das erfindungsgemäße Verfahren zum Testen einer zumindest in einem Steuergerät eingebauten Recheneinheit mit den Merkmalen des Anspruchs 1 weist gegenüber den bekannten Lösungsansätzen den Vorteil auf, dass auch Recheneinheiten in einem verbauten oder eingebauten Zustand und insbesondere auch im geschlossenen Steuergerät getestet werden können. Damit ist es erfindungsgemäß möglich, eine Recheneinheit oder mehrere Recheneinheiten eines Steuergerätes, das beispielsweise an einer beliebigen Stelle eines Kraftfahrzeuges verbaut ist, zu testen. Insbesondere können erfindungsgemäß bei dem verbauten Steuergerät der Stuck-At-Test und der Path-Delay-Test durchgeführt werden.

Durch das erfindungsgemäße Verfahren wird also sichergestellt, dass das Steuergerät und insbesondere dessen Recheneinheiten nach Stress oder nach Benutzung in derselben Art und Weise (und damit mit vergleichsweise ähnlich guter Testabdeckung) wie bei dem entsprechenden Halbleiterhersteller getestet werden können. Daraus ergibt sich insbesondere eine verbesserte Analysefähigkeit bei Feldrückläufern. Insbesondere wird die Wahrscheinlichkeit erhöht, dass ein bestimmter Fehler, der vom Halbleiterhersteller im nicht-verbauten Zustand gefunden werden könnte, im verbauten Zustand nicht gefunden wird.

Die der vorliegeriden Erfindung zugrunde liegende Idee besteht im Wesentlichen darin, ein Verfahren mit den folgenden Schritten zum Testen zumindest einer in einem Steuergerät eingebauten Recheneinheit bereitzustellen, wobei das Steuergerät eine Steuergerätschnittstelle, zumindest zwei Recheneinheiten, welche jeweils eine Scan-Kette (bzw. den Anfang einer Schaltung die die internen Scan Ketten zusammenschaltet) aufweisen, und zumindest eine Speichereinheit aufweist:
- Laden von ersten Testdaten mittels der Steuergeräteschnittstelle zum Testen einer ersten Recheneinheit;
- Speichern der geladenen ersten Testdaten in einer zweiten Speichereinheit einer zweiten Recheneinheit;
- Schalten der ersten Recheneinheit in einen Testmodus, in dem eine erste Scan-Kette der ersten Recheneinheit zugreifbar ist, mittels der zweiten Recheneinheit;
- Auslesen der ersten Testdaten aus der zweiten Speichereinheit mittels der zweiten Recheneinheit;
- Schieben der ausgelesenen ersten Testdaten durch die erste Scan-Kette der in den Testmodus geschalteten ersten Recheneinheit mittels der zweiten Recheneinheit zur Bereitstellung von Testergebnisdaten für die erste Recheneinheit;
- Prüfen der bereitgestellten Testergebnisdaten auf Plausibilität mittels der zweiten Recheneinheit zur Bereitstellung eines Testergebnisses für die erste Recheneinheit.

Erfindungsgemäß weist das erfindungsgemäße Verfahren weiter die folgenden Schritte auf:
- Laden von zweiten Testdaten zum Testen der zweiten Recheneinheit, wobei die zweiten Testdaten mittels der Steuergeräteschnittstelle oder die in der zweiten Speichereinheit gespeicherten ersten Testdaten als zweite Testdaten über eine interne Schnittstelle des Steuergeräts geladen werden;
- Speichern der geladenen zweiten Testdaten in einer ersten Speichereinheit der ersten Recheneinheit;
- Schalten der zweiten Recheneinheit in einen Testmodus, in dem eine zweite Scan-Kette der zweiten Recheneinheit zugreifbar ist, mittels der ersten Recheneinheit;
- Auslesen der zweiten Testdaten aus der ersten Speichereinheit mittels der ersten Recheneinheit;
- Schieben der ausgelesenen zweiten Testdaten durch die zweite Scan-Kette der in den Testmodus geschalteten zweiten Recheneinheit mittels der ersten Recheneinheit zur Bereitstellung von Testergebnisdaten für die zweite Recheneinheit; und
- Prüfen der bereitgestellten Testergebnisdaten auf Plausibilität mittels der ersten Recheneinheit zur Bereitstellung eines Testergebnisses für die zweite Recheneinheit.

In den Unteransprüchen finden sich vorteilhafte Weiterbildungen und Ausgestaltungen des in Anspruch 1 angegebenen Verfahrens zum Testen zumindest einer in einem Steuergerät eingebauten Recheneinheit.

Gemäß einer bevorzugten Weiterbildung der Erfindung werden die aus der zweiten Speichereinheit ausgelesenen Testdaten mittels der zweiten Recheneinheit über eine erste dedizierte Schnittstelle, mittels welcher die zweite Recheneinheit mit der ersten Scan-Kette gekoppelt wird, durch die erste Scan-Kette geschoben.

Gemäß einer weiteren bevorzugten Weiterbildung werden die aus der ersten Speichereinheit ausgelesenen zweiten Testdaten mittels der ersten Recheneinheit über eine zweite dedizierte Schnittstelle, mittels welcher die erste Recheneinheit mit der zweiten Scan-Kette gekoppelt wird, durch die zweite Scan-Kette geschoben.

Gemäß einer weiteren bevorzugten Weiterbildung wird das Steuergerät mit einem Taktgeber zur Bereitstellung eines vorbestimmbaren Taktes versehen und das Schieben derjeweiligen ausgelesenen Testdaten durch die jeweilige Scan-Kette wird zur Durchführung eines Path-Delay-Tests unter Verwendung des bereitgestellten Taktes durchgeführt.

Gemäß einer bevorzugten Ausgestaltung der Erfindung sind/ist die erste dedizierte Schnittstelle und/oder die zweite dedizierte Schnittstelle jeweils als ein Schieberegister oder eine ASC-Schnittstelle oder eine SPI-Schnittstelle ausgebildet.

Gemäß einer weiteren bevorzugten Ausgestaltung ist die Steuergeräteschnittstelle als CAN-Bus oder FlexRay-Bus oder K-Line-Bus ausgebildet.

Gemäß einer weiteren bevorzugten Ausgestaltung werden die jeweiligen bereitgestellten Testergebnisdaten und/oder die jeweiligen bereitgestellten Testergebnisse in zumindest einer Speichereinheit der ersten Recheneinheit oder der zweiten Recheneinheit gespeichert und/oder mittels der Steuergeräteschnittstelle zum Exportieren bereitgestellt.

Gemäß einer weiteren bevorzugten Ausgestaltung wird der Takt des Taktgebers über die Steuergeräteschnittstelle eingestellt.

Gemäß einer weiteren bevorzugten Weiterbildung sind die ersten Recheneinheit und die zweite Recheneinheit in einer einzigen integrierten Schaltung integriert, wobei jegliche Stuck-At-Pfade der integrierten Schaltung, die nicht zu der ersten Recheneinheit oder der zweiten Recheneinheit zugehörig sind, mittels der ersten Recheneinheit oder der zweiten Recheneinheit getestet werden.

### ZEICHNUNGEN

Ausführungsbeispiele der Erfindung sind in den Zeichnungen dargestellt und in der nachfolgenden Beschreibung näher erläutert.

Es zeigen:
- Fig. 1: ein schematisches Ablaufdiagramm eines ersten Teils des Ausführungsbeispiels des erfindungsgemäßen Verfahrens;
- Fig. 2: ein schematisches Ablaufdiagramm eines zweiten Teils des Ausführungsbeispiels des erfindungsgemäßen Verfahrens; und
- Fig. 3: eine schematische Ansicht eines Ausführungsbeispiels eines Steuergerätes, das mittels des erfindungsgemäßen Verfahrens getestet wird.

### BESCHREIBUNG DER AUSFÜHRUNGSBEISPIELE

In den Figuren bezeichnen gleiche Bezugszeichen gleiche oder funktionsgleiche Bestandteile.

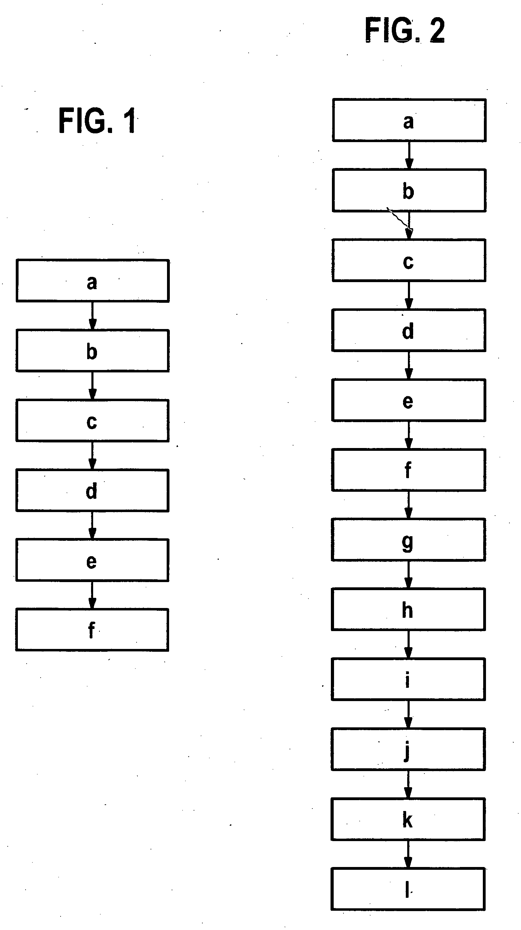

In Fig. 1 ist ein schematisches Ablaufdiagramm eines ersten Teils des Ausführungsbeispiels des erfindungsgemäßen Verfahrens dargestellt. Das erfindungsgemäße Verfahren zum Testen zumindest einer in einem Steuergerät eingebauten Microcontrollers mit den Recheneinheiten 2, 3 weist die unten stehenden Verfahrensschritte a) bis f) auf. Das Steuergerät weist dabei eine Steuergeräteschnittstelle, zumindest zwei Recheneinheiten 2, 3, welche jeweils eine Scan-Kette 4, 5 bzw. einen Bereich einer Scan-Kette 4, 5 aufweisen, und zumindest eine Speichereinheit 6, 7 auf.

### Verfahrensschritt a:

Es werden erste Testdaten mittels der Steuergeräteschnittstelle zum Testen einer ersten Recheneinheit 2 geladen. Die Steuergeräteschnittstelle ist vorzugsweise als CAN-Bus oder FlaxRay-Bus oder K-Line-Bus ausgebildet. Die Testdaten stellen insbesondere modellierte Testvektoren dar, die bei der Schaltungssynthese der entsprechenden Recheneinheit vom Halbleiterhersteller generiert bzw. modelliert werden. Vorzugsweise werden die Testdaten als sogenanntes Scan-Pattern vom Halbleiterhersteller zur Verfügung gestellt.

### Verfahrensschritt b:

Die ersten Testdaten werden in einer zweiten Speichereinheit 7 einer zweiten Recheneinheit 3 gespeichert bzw. abgelegt.

### Verfahrensschritt c:

Die erste Recheneinheit 2 wird in einen Testmodus mittels der zweiten Recheneinheit 3 geschaltet. In dem Testmodus ist eine erste Scan-Kette 4 bzw. ein Bereich der ersten Scan-Kette 4 der ersten Recheneinheit 2 zugreifbar, d. h. auf die erste Scan-Kette 4 kann beispielsweise mittels der zweiten Recheneinheit 3 zugegriffen werden.

### Verfahrensschritt d:

Die ersten Testdaten werden aus der zweiten Speichereinheit 7 mittels der zweiten Recheneinheit 3 ausgelesen.

### Verfahrensschritt e:

Die ausgelesenen ersten Testdaten werden durch die erste Scan-Kette 4 der in den Testmodus geschalteten ersten Recheneinheit 2 mittels der zweiten Recheneinheit 3 zur Bereitstellung von Testergebnisdaten für die erste Recheneinheit 2 geschoben. Vorzugsweise werden die aus der zweiten Speichereinheit 7 ausgelesenen ersten Testdaten mittels der zweiten Recheneinheit 3 über eine erste dedizierte Schnittstelle 8, mittels welcher die zweite Recheneinheit 3 mit der ersten Scan-Kette 4 gekoppelt wird, durch die erste Scan-Kette 4 geschoben. Insbesondere ist die erste dedizierte Schnittstelle 8 als ein Schieberegister oder eine ASC-Schnittstelle oder eine SPI-Schnittstelle ausgebildet.

### Verfahrensschritt f:

Die bereitgestellten Testergebnisdaten werden auf Plausibilität mittels der zweiten Recheneinheit 3 zur Bereitstellung eines Testergebnisses für die erste Recheneinheit 2 geprüft. Insbesondere werden die bereitgestellten Testergebnisdaten mit zu erwartenden Testergebnisdaten verglichen. Das Testergebnis sagt insbesondere aus, ob ein Fehler und insbesondere ein Stuck-At-Fehler für die erste Scan-Kette 4 vorliegt. Vorzugsweise werden die bereitgestellten Testergebnisdaten und/oder das bereitgestellte Testergebnis für die erste Recheneinheit 2 in einer Speichereinheit, insbesondere der zweiten Speichereinheit 7, gespeichert. Alternativ können die bereitgestellten Testergebnisdaten und/oder das bereitgestellte Testergebnis für die erste Recheneinheit 2 auch über die Steuergeräteschnittstelle zum Exportieren mittels einer beliebigen Analysevorrichtung bereitgestellt werden.

Fig. 2 zeigt ein schematisches Ablaufdiagramm eines zweiten Teils des Ausführungsbeispiels des erfindungsgemäßen Verfahrens. Das Ausführungsbeispiel gemäß Fig. 2 weist die Verfahrensschritte a) bis f) des Ausführungsbeispiels gemäß Fig. 1 sowie die unten stehenden Verfahrensschritte g) bis I) auf. Das Ausführungsbeispiel gemäß Fig. 2 stellt ein Testverfahren bereit, bei welchem die erste Recheneinheit 2 mittels der zweiten Recheneinheit 3 und die zweite Recheneinheit 3 mittels der ersten Recheneinheit 2 getestet wird.

Die Verfahrensschritte a) bis f) gemäß Fig. 2 entsprechen den Verfahrensschritten a) bis f) gemäß Fig. 1. Das Ausführungsbeispiel gemäß Fig. 2 schließt mit dem Verfahrensschritt g) an den Verfahrensschritt f) des Ausführungsbeispiels nach Fig. 1 an.

### Verfahrensschritt g):

Es werden zweite Testdaten zum Testen der zweiten Rechnereinheit 3 geladen, wobei die zweiten Testdaten mittels der Steuergeräteschnittstelle oder die in der zweiten Speichereinheit 7 gespeicherten ersten Testdaten als zweite Testdaten über eine interne Schnittstelle des Steuergerätes 1 geladen werden. Die interne Schnittstelle ist beispielsweise als ein Bussystem des Steuergerätes ausgebildet.

### Verfahrensschritt h):

Die geladenen zweiten Testdaten werden in einer ersten Speichereinheit 6 der ersten Recheneinheit 2 gespeichert bzw. abgelegt.

### Verfahrensschritt i):

Die zweite Recheneinheit 3 wird mittels der ersten Recheneinheit 2 in einen Testmodus geschaltet, in dem eine zweite Scan-Kette 5 der zweiten Recheneinheit 3 zugreifbar ist. Insbesondere kann in dem Testmodus die zweite Recheneinheit 2 auf die zweite Scan-Kette 5 der zweiten Recheneinheit 3 zugreifen.

### Verfahrensschritt j):

Die zweiten Testdaten werden aus der ersten Speichereinheit 6 mittels der ersten Recheneinheit 2 ausgelesen.

### Verfahrensschritt k):

Die ausgelesenen zweiten Testdaten werden durch die zweite Scan-Kette 5 der in den Testmodus geschalteten zweiten Recheneinheit 3 mittels der ersten Recheneinheit 2 zur Bereitstellung von Testergebnisdaten für die zweite Recheneinheit 5 geschoben. Vorzugsweise werden die aus der ersten Speichereinheit 6 ausgelesenen zweiten Testdaten mittels der ersten Recheneinheit 2 über eine zweite dedizierte Schnittstelle 9 durch die zweite Scan-Kette 5 geschoben. Die zweite dedizierte Schnittstelle 9 koppelt die erste Recheneinheit 2 mit der zweiten Scan-Kette 5 und ist insbesondere als ein Schieberegister oder eine ASC-Schnittstelle oder eine SPI-Schnittstelle ausgebildet.

### Verfahrensschritt I):

Die bereitgestellten Testergebnisdaten werden auf Plausibilität mittels der ersten Recheneinheit 2 zur Bereitstellung eines Testergebnisses für die zweite Recheneinheit 3 geprüft. Bei der Plausibilitätsprüfung werden die bereitgestellten Testergebnisdaten mit zu erwartenden Testergebnisdaten, welche von den zweiten Testdaten abhängig sind, verglichen. Vorzugsweise werden die bereitgestellten Testergebnisdaten und/oder das bereitgestellte Testergebnis für die zweite Recheneinheit 3 in zumindest einer Speichereinheit 6, 7 des Steuergerätes 1, insbesondere in der ersten Speichereinheit 6, gespeichert Alternativ werden die bereitgestellten Testergebnisdaten und/oder das bereitgestellte Testergebnis für die zweite Recheneinheit 3 über die Steuergeräteschnittstelle zum Exportieren mittels einer beliebigen Analysevorrichtung bereitgestellt.

Vorzugsweise wird sowohl bei dem ersten Teils des Ausführungsbeispiel nach Fig. 1 als auch bei dem zweiten Teils des Ausführungsbeispiel nach Fig. 2 das Steuergerät 1 mit einem Taktgeber 10 zur Bereitstellung eines vorbestimmbaren Taktes versehen. Folglich können die jeweiligen ausgelesenen Testdaten durch die jeweilige Scan-Kette 4, 5 getaktet geschoben werden. Somit wird die Durchführung eines Path-Delay-Tests unter Verwendung des bereitgestellten Taktes ermöglicht. Bei dem Path-Delay-Test werden insbesondere Verzögerungszeiten beim Durchschieben durch einzelne Einheiten der jeweiligen Scan-Kette oder Scan-Pfad gemessen. Vorzugsweise wird der Takt des Taktgebers 10 über die Steuergeräteschnittstelle eingestellt. Dazu wird beispielsweise eine Analysevorrichtung an die Steuergeräteschnittstelle gekoppelt, mit welcher der Takt des Taktgebers 10 eingestellt wird.

Insbesondere können nach den beiden Ausführungsbeispielen gemäß Fig. 1 und Fig. 2 die erste Recheneinheit 2 und die zweite Recheneinheit 3 in einer einzigen integrierten Schaltung integriert werden, wobei jegliche Stuck-At-Pfade oder Ketten der integrierten Schaltung, die nicht zu der ersten Recheneinheit 2 oder der zweiten Recheneinheit 3 zugehörig sind, mittels der ersten Recheneinheit 2 oder der zweiten Recheneinheit 3 getestet werden.

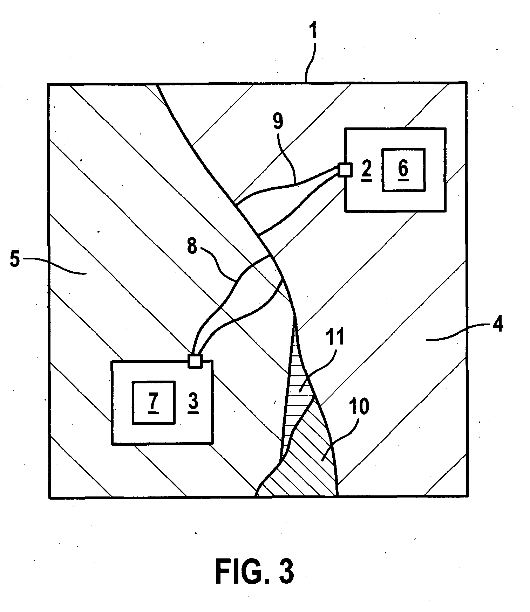

Fig. 3 zeigt eine schematische Ansicht eines Ausführungsbeispiels eines Microcontrollers 1, das mittels des erfindungsgemäßen Verfahrens - wie oben beschrieben - getestet wird. Das Bezugszeichen 1 bezeichnet insbesondere die Silizium-Fläche des Microcontrollers. Der Microcontroller 1 weist eine erste Recheneinheit 2 mit einer ersten Speichereinheit 6 und eine zweite Recheneinheit 3 mit einer zweiten Speichereinheit 7 auf. Weiter weist das Steuergerät 1 eine Steuergeräteschnittstelle (nicht gezeigt), einen ersten Taktgeber 10 und einen zweiten Taktgeber 11 auf. Der erste Taktgeber 10 liefert insbesondere den Takt für die Durchführung des Path-Delay-Tests. Der zweite Taktgeber 11 taktet beispielsweise die erste Recheneinheit 2 und/oder die zweite Recheneinheit 3. Die Bezugszeichen 4 und 5 bezeichnen einen Bereich der ersten Scan-Kette 4 auf der Silizium-Fläche bzw. einen Bereich der zweiten Scan-Kette 5 auf der Silizium-Fläche. Mittels der ersten dedizierten Schnittstelle 8 kann die zweite Recheneinheit 3 auf den Bereich der ersten Scan-Kette 4 zugreifen. Mittels der zweiten dedizierten Schnittstelle 9 kann die erste Recheneinheit 2 auf den Bereich der zweiten Scan-Kette 5 zugreifen. Insbesondere sind die dedizierten Schnittstellen 8, 9 jeweils als ein Schieberegister ausgebildet.

Obwohl die vorliegende Erfindung vorstehend anhand bevorzugter Ausführungsbeispiele beschrieben wurde, ist sie darauf nicht beschränkt, sondern auf vielfältige Weise modifizierbar. So ist beispielsweise die Anzahl zu testender Recheneinheiten eines Steuergerätes, welche mittels des erfindungsgemäßen Verfahrens getestet werden, nicht auf zwei beschränkt. Jegliche beliebige Anzahl an Recheneinheiten eines Steuergerätes ist mittels des erfindungsgemäßen Verfahrens testbar. Eine weitere Ausführungsform ist die Anordnung der Testvektoren in einem gemeinsamen Speicher. Weiterhin ist es möglich, dass die Testdaten nicht im Silizium gespeichert werden sondern sowohl die Eingangs- als auch die Ausgangsdaten über eine (nicht in den Zeichnungen enthaltene) für jede Recheneinheit separate Steuergeräteschnittstelle geladen und auch wieder nach außen gesendet werden.

## Patentansprüche

1. Verfahren zum Testen von in einem Steuergerät eingebauten Recheneinheiten (2,3), wobei das Steuergerät eine Steuergeräteschnittstelle, zumindest zwei Recheneinheiten (2,3), welche jeweils eine Scan-Kette (4, 5) aufweisen, und zumindest zwei Speichereinheiten (6, 7) aufweist, mit den Schritten:
a) Laden von ersten Testdaten mittels der Steuergeräteschnittstelle zum Testen einer ersten Recheneinheit (2);
b) Speichern der geladenen ersten Testdaten in einer zweiten Speichereinheit (7) einer zweiten Recheneinheit (3);
c) Schalten der ersten Recheneinheit (2) in einen Testmodus, in dem eine erste Scan-Kette (4) der ersten Recheneinheit (2) zugreifbar ist, mittels der zweiten Recheneinheit (3);
d) Auslesen der ersten Testdaten aus der zweiten Speichereinheit (7) mittels der zweiten Recheneinheit (3);
e) Schieben der ausgelesenen ersten Testdaten durch die erste Scan-Kette (4) der in den Testmodus geschalteten ersten Recheneinheit (2) mittels der zweiten Recheneinheit (3) zur Bereitstellung von Testergebnisdaten für die erste Recheneinheit (2);
f) Prüfen der bereitgestellten Testergebnisdaten auf Plausibilität mittels der zweiten Recheneinheit (3) zur Bereitstellung eines Testergebnisses für die erste Recheneinheit (2);
g) Laden von zweiten Testdaten zum Testen der zweiten Recheneinheit (3), wobei die zweiten Testdaten mittels der Steuergeräteschnittstelle oder die in der zweite n Speichereinheit (7) gespeicherten ersten Testdaten als zweite Testdaten über eine interne Schnittstelle des Steuergeräts (1) geladen werden;
h) Speichern der geladenen zweiten Testdaten in einer ersten Speichereinheit (6) der ersten Recheneinheit (2);
i) Schalten der zweiten Recheneinheit (3) in einen Testmodus, in dem eine zweite Scan-Kette (5) der zweiten Recheneinheit (3) zugreifbar ist, mittels der ersten Recheneinheit (2);
j) Auslesen der zweiten Testdaten aus der ersten Speichereinheit (6) mittels der ersten Recheneinheit (2);
k) Schieben der ausgelesenen zweiten Testdaten durch die zweite Scan-Kette (5) der in den Testmodus geschalteten zweiten Recheneinheit (3) mittels der ersten Recheneinheit (2) zur Bereitstellung von Testergebnisdaten für die zweite Recheneinheit (5); und
l) Prüfen der bereitgestellten Testergebnisdaten auf Plausibilität mittels der ersten Recheneinheit (2) zur Bereitstellung eines Testergebnisses für die zweite Recheneinheit (3).

2. Verfahren nach Anspruch 1, **dadurch gekennzeichnet, dass** die aus der zweiten Speichereinheit (7) ausgelesenen ersten Testdaten mittels der zweiten Recheneinheit (3) über eine erste dedizierte Schnittstelle (8), mittels welcher die zweite Recheneinheit (3) mit der ersten Scan-Kette (4) gekoppelt wird, durch die erste Scan-Kette (4) geschoben werden.

3. Verfahren nach Anspruch 2, **dadurch gekennzeichnet, dass** die erste dedizierte Schnittstelle (8) als ein Schieberegister oder eine ASC-Schnittstelle oder eine SPI-Schnittstelle ausgebildet ist.

4. Verfahren nach Anspruch 2, **dadurch gekennzeichnet, dass** die aus der ersten Speichereinheit (6) ausgelesenen zweiten Testdaten mittels der ersten Recheneinheit (2) über eine zweite dedizierte Schnittstelle (9), mittels welcher die erste Recheneinheit (2) mit der zweiten Scan-Kette (5) gekoppelt wird, durch die zweite Scan-Kette (5) geschoben werden.

5. Verfahren nach Anspruch 4, **dadurch gekennzeichnet, dass** die erste dedizierte Schnittstelle (8) und/oder die zweite dedizierte Schnittstelle (9) jeweils als ein Schieberegister oder eine ASC-Schnittstelle oder eine SPI-Schnittstelle ausgebildet sind/ist.

6. Verfahren nach einem oder mehreren der Ansprüche 1 bis 5, **dadurch gekennzeichnet, dass** das Steuergerät (1) mit einem Taktgeber (10) zur Bereitstellung eines vorbestimmbaren Taktes versehen wird und das Schieben der jeweiligen ausgelesenen Testdaten durch die jeweilige Scan-Kette (4, 5) zur Durchführung eines Path-Delay-Tests unter Verwendung des bereitgestellten Taktes durchgeführt wird.

7. Verfahren nach Anspruch 6, **dadurch gekennzeichnet, dass** der Takt des Taktgebers (10) über die Steuergeräteschnittstelle eingestellt wird.

8. Verfahren nach einem oder mehreren der Ansprüche 1 bis 5, **dadurch gekennzeichnet, dass** die Steuergeräteschnittstelle als CAN-Bus oder FlexRay-Bus oder K-Line-Bus oder LIN-Bus ausgebildet ist.

9. Verfahren nach einem oder mehreren der Ansprüche 1 bis 5, **dadurch gekennzeichnet, dass** die jeweiligen bereitgestellten Testergebnisdaten und/oder die jeweiligen bereitgestellten Testergebnisse in zumindest einer Speichereinheit (6, 7) der ersten Recheneinheit (2) oder der zweiten Recheneinheit (3) gespeichert werden und/oder mittels der Steuergeräteschnittstelle zum Exportieren bereitgestellt werden.

10. Verfahren nach einem oder mehreren der Ansprüche 1 bis 5, **dadurch gekennzeichnet, dass** die erste Recheneinheit (2) und die zweite Recheneinheit (3) in einer einzigen integrierten Schaltung integriert sind, wobei jegliche Stuck-At-Pfade der integrierten Schaltung, die nicht zu der ersten Recheneinheit (2) oder der zweiten Recheneinheit (3) zugehörig sind, mittels der ersten Recheneinheit (2) oder der zweiten Recheneinheit (3) getestet werden.

## Claims

1. Method for testing arithmetic logic units (2, 3) installed in a control device, the control device having a control device interface, at least two arithmetic logic units (2, 3) which respectively have a scan chain (4, 5), and at least two memory units (6, 7), having the steps of:
a) loading first test data by means of the control device interface for testing a first arithmetic logic unit (2);
b) storing the loaded first test data in a second memory unit (7) of a second arithmetic logic unit (3);
c) switching the first arithmetic logic unit (2) into a test mode in which a first scan chain (4) of the first arithmetic logic unit (2) can be accessed by means of the second arithmetic logic unit (3);
d) reading out the first test data from the second memory unit (7) by means of the second arithmetic logic unit (3);
e) shifting the read out first test data through the first scan chain (4) of the first arithmetic logic unit (2), switched into the test mode, by means of the second arithmetic logic unit (3) in order to provide test result data for the first arithmetic logic unit (2);
f) checking the provided test result data for plausibility by means of the second arithmetic logic unit (3) in order to provide a test result for the first arithmetic logic unit (2);
g) loading second test data for testing the second arithmetic logic unit (3), the second test data being loaded by means of the control device interface, or the first test data stored in the second memory unit (7) being stored as second test data via an internal interface of the control device (1);
h) storing the loaded second test data in a first memory unit (6) of the first arithmetic logic unit (2);
i) switching the second arithmetic logic unit (3) into a test mode in which a second scan chain (5) of the second arithmetic logic unit (3) can be accessed by means of the first arithmetic logic unit (2);
j) reading out the second test data from the first memory unit (6) by means of the first arithmetic logic unit (2);
k) shifting the read out second test data through the second scan chain (5) of the second arithmetic logic unit (3), switched into the test mode, by means of the first arithmetic logic unit (2) in order to provide test result data for the second arithmetic logic unit (3); and
l) checking the provided test result data for plausibility by means of the first arithmetic logic unit (2) in order to provide a test result for the second arithmetic logic unit (3).

2. Method according to Claim 1, **characterized in that** the first test data read out from the second memory unit (7) is shifted by the first scan chain (4) by means of the second arithmetic logic unit (3) via a first dedicated interface (8), by means of which the second arithmetic logic unit (3) is coupled to the first scan chain (4).

3. Method according to Claim 2, **characterized in that** the first dedicated interface (8) is designed as a shift register or an ASC interface or an SPI interface.

4. Method according to Claim 2, **characterized in that** the second test data read out from the first memory unit (6) are shifted through the second scan chain (5) by means of the first arithmetic logic unit (2) via a second dedicated interface (9), by means of which the first arithmetic logic unit (2) is coupled to the second scan chain (5).

5. Method according to Claim 4, **characterized in that** the first dedicated interface (8) and/or the second dedicated interface (9) are/is respectively designed as a shift register or an ASC interface or an SPI interface.

6. Method according to one or more of Claims 1 to 5, **characterized in that** the control device (1) is provided with a clock generator (10) for providing a predeterminable clock pulse, and the shifting of the respective read out test data is carried out by the respective scan chain (4, 5) for carrying out a path delay test by using the provided clock pulse.

7. Method according to Claim 6, **characterized in that** the clock pulse of the clock generator (10) is set via the control device interface.

8. Method according to one or more of Claims 1 to 5, **characterized in that** the control device interface is designed as a CAN bus or FlexRay bus, a K-Line bus, or a LIN bus.

9. Method according to one or more of Claims 1 to 5, **characterized in that** the respective provided test result data and/or the respective provided test results are stored in at least one memory unit (6, 7) of the first arithmetic logic unit (2) or the second arithmetic logic unit (3), and/or are provided for exporting by means of the control device interface.

10. Method according to one or more of Claims 1 to 5, **characterized in that** the first arithmetic logic unit (2) and the second arithmetic logic unit (3) are integrated into a single integrated circuit, and any stuck-at paths of the integrated circuit which do not belong to the first arithmetic logic unit (2) or the second arithmetic logic unit (3) are tested by means of the first arithmetic logic unit (2) or the second arithmetic logic unit (3).

## Revendications

1. Procédé de test d'unités de calcul (2, 3) incorporé dans un appareil de commande, l'appareil de commande présentant
une interface d'appareil de commande,
au moins deux unités de calcul (2, 3) qui présentent chacune une chaîne (4, 5) de balayage et
au moins deux unités de mémoire (6, 7),
le procédé comportant les étapes suivantes :
a) chargement de premières données de test au moyen de l'interface d'appareil de commande, pour tester une première unité de calcul (2),
b) mise en mémoire des premières données de test qui ont été chargées, dans une deuxième unité de mémoire (7) d'une deuxième unité de calcul (3),
c) au moyen de la deuxième unité de calcul (3), commutation de la première unité de calcul (2) en mode de test dans lequel une première chaîne de balayage (4) de la première unité de calcul (2) peut être accédée,
d) au moyen de la deuxième unité de calcul (3), lecture des premières données de test dans la deuxième unité de mémoire (7),
e) au moyen de la deuxième unité de calcul (3), déplacement des premières données de test lues dans la première chaîne de balayage (4) de la première unité de calcul (2) commutée en mode de test, pour délivrer les données de résultat de test de la première unité de calcul (2),
f) au moyen de la deuxième unité de calcul (3), vérification de la plausibilité des données de résultat de test délivrées, pour délivrer un résultat de test de la première unité de calcul (2),
g) par l'intermédiaire d'une interface interne de l'appareil de commande (1), chargement de deuxièmes données de test servant à tester la deuxième unité de calcul (3), les deuxièmes données de test étant chargées au moyen de l'interface d'appareil de commande où les premières données de test conservées en mémoire dans la deuxième unité de mémoire (7) sont chargées en tant que deuxièmes données de test,
h) conservation dans une première unité de mémoire (6) de la première unité de calcul (2) des deuxièmes données de test qui ont été chargées,
i) au moyen de la première unité de calcul (2), commutation de la deuxième unité de calcul (3) en mode de test dans lequel une deuxième chaîne de balayage (5) de la deuxième unité de calcul (3) peut être accédée,
j) au moyen de la première unité de calcul (2), lecture des deuxièmes données de test dans la première unité de mémoire (6),
k) au moyen de la première unité de calcul (2), déplacement des deuxièmes données de test lues dans la deuxième chaîne de balayage (5) de la deuxième unité de calcul (3) commutée en mode de test, pour délivrer des données de résultat de test de la deuxième unité de calcul (3) et
l) au moyen de la première unité de calcul (2), vérification de la plausibilité des données de résultat de test qui ont été délivrées, pour délivrer le résultat du test de la deuxième unité de calcul (3).

2. Procédé selon la revendication 1, **caractérisé en ce que** les premières données de test lues dans la deuxième unité de mémoire (7) sont déplacées dans la première chaîne de balayage (4) au moyen de la deuxième unité de calcul (3) par l'intermédiaire d'une première interface dédiée (8) au moyen de laquelle la deuxième unité de calcul (3) est raccordée à la première chaîne de balayage (4).

3. Procédé selon la revendication 2, **caractérisé en ce que** la première interface dédiée (8) est configurée comme registre glissant, interface ASC ou interface SPI.

4. Procédé selon la revendication 2, **caractérisé en ce que** les deuxièmes données de test lues dans la première unité de mémoire (6) sont déplacées dans la deuxième chaîne de balayage (5) au moyen de la première unité de calcul (2), par l'intermédiaire d'une deuxième interface dédiée (9) au moyen de laquelle la première unité de calcul (2) est raccordée à la deuxième chaîne de balayage (5).

5. Procédé selon la revendication 4, **caractérisé en ce que** la première interface dédiée (8) et/ou la deuxième interface dédiée (9) sont toutes deux configurées comme registres glissants, interfaces ASC ou interfaces SPI.

6. Procédé selon l'une ou plusieurs des revendications 1 à 5, **caractérisé en ce que** l'appareil de commande (1) est doté d'une horloge (10) qui délivre une cadence prédéterminée et **en ce que** le déplacement des données de test lues dans la chaîne de balayage (4, 5) concernée est réalisé en exécutant un test de retard de parcours qui recourt à la cadence délivrée.

7. Procédé selon la revendication 6, **caractérisé en ce que** la cadence de l'horloge (10) est ajustée par l'intermédiaire de l'interface d'appareil de commande.

8. Procédé selon l'une ou plusieurs des revendications 1 à 5, **caractérisé en ce que** l'interface d'appareil de commande est configurée comme bus CAN, bus Flex-Ray, bus ligne K ou bus LIN.

9. Procédé selon l'une ou plusieurs des revendications 1 à 5, **caractérisé en ce que** les données de résultat de test délivrées et/ou les résultats de test délivrés sont conservés dans au moins une unité de mémoire (6, 7) de la première unité de calcul (2) ou de la deuxième unité de calcul (3) et/ou sont délivrés au moyen de l'interface d'appareil de commande en vue de leur exportation.

10. Procédé selon l'une ou plusieurs des revendications 1 à 5, **caractérisé en ce que** la première unité de calcul (2) et la deuxième unité de calcul (3) sont intégrées dans un unique circuit intégré, les parcours "Stuck-At" du circuit intégré qui ne font pas partie de la première unité de calcul (2) ou de la deuxième unité de calcul (3) étant testés au moyen de la première unité de calcul (2) ou de la deuxième unité de calcul (3).
